# EUROPÄISCHE PATENTSCHRIFT

(11) **EP 2 457 359 B1**
(45) Veröffentlichungstag und Bekanntmachung des Hinweises auf die Patenterteilung: **11.04.2018**
(21) Anmeldenummer: 10722696.1
(22) Anmeldetag: 28.05.2010
(51) Int. Cl.: H04L 29/08, H04W 84/18, B60R 16/023, G01C 21/00, G08G 1/16

(54) **FAHRZEUG-ANTENNENEINHEIT**
VEHICLE ANTENNA UNIT
ENSEMBLE ANTENNE DE VÉHICULE

(30) Priorität: 05.06.2009 DE 102009026786
(43) Veröffentlichungstag der Anmeldung: 30.05.2012
(73) Patentinhaber: Continental Teves AG & Co. oHG, 60488 Frankfurt (DE); ADC Automotive Distance Control Systems GmbH, 88131 Lindau/Bodensee (DE)
(72) Erfinder: STÄHLIN, Ulrich, 65670 Eschborn (DE); MENZEL, Marc, 35043 Marburg (DE); SCHÜRMEIER, Martin, 93047 Regensburg (DE)
(86) Internationale Anmeldenummer: PCT/EP2010/057504
(87) Internationale Veröffentlichungsnummer: WO 2010/149467

(56) Entgegenhaltungen:
- DE-A1-102005 029 662
- DE-A1-102008 012 654
- US-A1- 2007 083 318
- BRIAN GALLAGHER ET AL: "Wireless communications for vehicle safety: Radio link performance and wireless connectivity methods", IEEE VEHICULAR TECHNOLOGY MAGAZINE, IEEE, US, Bd. 1, Nr. 4, 1. Dezember 2006 (2006-12-01), Seiten 4-24, XP011176537, ISSN: 1556-6072
- MORIOKA Y ET AL: "An anti-carcollision system using GPS and 5.8GHz inter-vehicle communication at an off-sight -intersection", VEHICULAR TECHNOLOGY CONFERENCE, 2000. IEEE VTS FALL VTC 2000. 52ND SEPT. 24-28, 2000, PISCATAWAY, NJ, USA,IEEE, Bd. 5, 24. September 2000 (2000-09-24), Seiten 2019-2024, XP010522147, ISBN: 978-0-7803-6507-0
- YASUHIRO SATO ET AL: "Vehicular Collision Avoidance Support System v2 (VCASSv2) by GPS+INS Hybrid Vehicular Positioning Method", TELECOMMUNICATION NETWORKS AND APPLICATIONS CONFERENCE, 2007. ATNAC 2007. AUSTRALASIAN, IEEE, PISCATAWAY, NJ, USA, 2. Dezember 2007 (2007-12-02), Seiten 29-34, XP031356795, ISBN: 978-1-4244-1557-1

## Beschreibung

Die Erfindung betrifft eine Fahrzeug-Antenneneinheit zur Teilnahme an der Fahrzeug-zu-Fahrzeug-Umgebung-Kommunikation (C2X), insbesondere der Fahrzeug-zu-Fahrzeug (C2C) und der Fahrzeug-zu-Infrastruktur (C2I) Kommunikation, die nachfolgend zusammengefasst als C2X-Kommunikation bezeichnet werden, entsprechend dem DSRC- oder ITS-G5-Standard insbesondere basierend auf dem IEEE 802.11p Protokoll. Die Fahrzeug-Antenneneinheit weist eine Adhoc-Netzwerk-Antenne zum Senden und Empfangen von Signalen im Bereich von 5,9 GHz sowie eine Satelliten-Antenne zum Empfangen von Satelliten-Ortungs-Signalen beispielsweise des GPS-, Galileo- oder eines sonstigen satellitenbasierten Ortungs-Systems auf. Ferner sind in der Fahrzeug-Antennen-einheit der jeweiligen Antenne zugordnete Treiberelemente vorgesehen, die zum Aussenden und/oder Empfangen von Daten oder Signalen mit der Adhoc-Netzwerk-Antenne und der Satelliten-Antennen eingerichtet sind. Insbesondere die Treiberelemente der Adhoc-Netzwerk-Antenne können zum bitweisen Aussenden und Empfangen von Daten vorgesehen sein. Diese Treiberelemente können als Hardware und/oder Software in einer Recheneinheit der Antenneneinheit realisiert sein und für die C2X-Kommunikations insbesondere die Anforderungen der untersten Schicht (physikalische Schicht) des C2X-Kommunikationsprotokollstapels erfüllen, d.h. insbesondere das Herstellen und Aufrechterhalten einer physikalischen Verbindung mit dem Adhoc-Netzwerk bei der vorgegebenen Übertragungsfrequenz und die bitweise Übertragung (Senden und Empfangen) von Datensätzen. Zur Aufbereitung und Kommunikationssteuerung der Daten ist ferner eine Recheneinheit in der Fahrzeug-Antenneneinheit vorgesehen, die vorzugsweise auch die Software für den Kommunikationsstack (Kommunikationsprotokollstapel) aufweist, so dass die Fahrzeug-Antenneneinheit aus Kostengründen insbesondere nur eine Fahrzeugeinheit aufweist.

Fahrzeug-Antenneneinheiten mit mehreren Antennen sind bekannt, seit die Fahrzeuge typischerweise mit verschiedenen Telematikfunktionen, wie beispielsweise Mobiltelefon, Radio, Satellitenortung und dergleichen ausgestattet sind. Im Rahmen der sich gerade entwickelnden Fahrzeug-zu-Fahrzeug- bzw. Fahrzeug-zu-Infrastruktur-Kommunikation (C2X) werden ferner Antenneneinrichtungen entwickelt, die für die als DSRC oder auch als ITS-G5 bezeichneten Datenübertragung nach IEEE 802.11p eingerichtet sind.

In der Entwicklung finden sich ferner bereits Antennen, die auch Transceiver und zum Teil weitere Elektronik in räumlicher Nähe oder direkt integriert in der Antenne enthalten. Hierzu wird beispielsweise auf die DE 198 43 664 A1 verwiesen, die ein Kommunikationssystem mit einer eine Antenne umfassenden Kommunikationseinrichtung aufweist, in welcher geeignete elektronische Einrichtungen zur Durchführung einer CDMA-Kommunikation untergebracht sind. Die dort gezeigte Antenneneinheit ist jedoch weder zur Durchführung unterschiedlicher Kommunikationsarten eingerichtet noch kann sie die Kommunikation steuern. Für die Durchführung der Kommunikation ist sie vielmehr darauf angewiesen, dass weitere Fahrzeugeinheiten die zur Übertragung vorgesehenen Daten bereitstellen und die Kommunikation steuern.

Um die Einführung der C2X-Kommunikation zu begünstigen und für eine ausreichende Netzknotendichte im Verkehr zu sorgen, ist es Aufgabe der vorliegenden Erfindung, einen kostengünstigen Netzwerkknoten für die Teilnahme an der C2X-Kommunikation im Rahmen eines Adhoc-Netzwerkes vorzuschlagen.

Diese Aufgabe mit den Merkmalen das Anspruchs 1 gelöst. Bei einer Fahrzeug-Antenneneinheit der eingangs genannten Art ist dazu insbesondere vorgesehen, dass die Recheneinheit zur Auswertung der Satelliten-Ortungssignale und zur autarken Teilnahme der Antenneneinheit an der Fahrzeug-zu-Umgebung-Kommunikation insbesondere entsprechend dem DSRC- oder ITS-G5 Standard basierend auf IEEE 802.11p eingerichtet ist. Als autarke Teilnahme wird eine Teilnahme an der C2X-Kommunikation verstanden, bei der sämtliche Verarbeitungsschritte des C2X-Kommunikationsprotokollstapels von der Recheneinheit der Fahrzeug-Antenneneinheit eigenständig und ohne einen notwendigen Zugriff auf durch ein fahrzeuginternes Kommunikationsnetz zur Verfügung gestellten Daten anderer Fahrzeugeinheiten ausgeführt werden bzw. ausgeführt werden können. Dies schließt nicht aus, dass die Antennen-einheit einen oder mehrere Anschlüsse an ein fahrzeuginternes Kommunikationsnetz aufweist und über dieses Informationen mit anderen Fahrzeugeinheiten austauscht. Diese Informationen können ggf. auch in der C2X-Kommunikation verwendet werden, bspw. beim Aussenden von Daten zur eigenen Fahrzeugposition oder zur Anzeige von Gefahrenmeldungen im Fahrzeug. Derartige Informationen setzen aber weitere Fahrzeugeinheiten voraus, die gemeinsam mit der Fahrzeug-Antenneneinheit an das fahrzeuginterne Kommunikationsnetz angeschlossen sind und diese Informationen liefern und verwerten. Entscheidend im Rahmen der vorliegenden Erfindung ist jedoch, dass die Fahrzeug-Antenneneinheit (nachfolgend vereinfacht auch nur als Antenneneinheit bezeichnet) auch unabhängig von diesen möglicherweise weiter angeschlossenen Fahrzeugeinheiten völlig eigenständig, d.h. autark, an der C2X-Kommunikation teilnimmt und die Recheneinheit der Fahrzeug-Antenneneinheit dazu eingerichtet ist, unabhängig von möglicherweise weiteren in der Recheneinheit eingerichteten Anwendungen oder Funktionen.

Daher ist die Recheneinheit erfindungsgemäß dazu eingerichtet, autark an der Adhoc-Netzwerk-Funkkommunikation teilzunehmen, d.h. Datentelegramme zu empfangen, zu senden und ggf. weiterzuleiten sowie ggf. zumindest Informationen über die Fahrzeugposition, die Fahrzeuggeschwindigkeit und die Fahrrichtung auszusenden. Diese Informationen werden sowohl von anderen Kommunikationsteilnehmern im Rahmen der C2X-Kommunikation inhaltlich ausgewertet, um bspw. Rückschlüsse auf die Verkehrsituation zu ziehen oder auf Gefahrensituationen hinzuweisen, als auch in der Netzwerkvermittlung für die Weitervermittlung der Datenpakete verwendet, da bei einem Adhoc-Netzwerk die als Netzwerkknoten fungierenden Teilnehmer in Übertragungsreichweite nicht stationär sind, so dass das Netzwerk zu jeder Zeit anders aussieht.

Daher ist die Recheneinheit vorzugsweise dazu eingerichtet, aus empfangenen Satelliten-Ortungssignalen die Fahrzeugposition, die Fahrzeuggeschwindigkeit und die Fahrrichtung zu ermitteln, wobei diese Informationen dem C2X-Kommunika-tionsprotokollstapel zur Verfügung gestellt werden können, um die Vermittlung von Datenpakten in dem Adhoc-Netzwerk zu organisieren. Diese Organisation findet typischer Weise in der sog. ITS-Netzwerkschicht (ITS-Network Layer) statt. Daher ist es besonders vorteilhaft, wenn die Recheneinheit nicht nur dazu eingerichtet ist, die ermittelten Fahrzeugdaten (Position, Geschwindigkeit, Richtung) als auszusendende Daten bspw. in einem Bitdatenstrom zur Verfügung zu stellen, sondern die Daten an einer internen Schnittstelle der Recheneinheit auch direkt in die ITS-Netzwerkschicht einzugeben. Im Falle unterschiedlicher, separater Recheneinheiten kann die Schnittstelle natürlich erfindungsgemäß auch als Schnittstelle zwischen den verschiedenen Recheneinheiten ausgebildet sein. Ggf. können diese in die Schnittstelle eingegebenen Fahrzeugdaten neben der Netzwerkvermittlung auch unmittelbar als Informationsdaten der C2X-Kommunikation in den Datenpakete verwendet werden, ohne dass diese gesondert als Informationsdaten bspw. über die IST-Facilities-Schicht zur Verfügung gestellt werden müssen. So kann die aktuelle Position besonders schnell in einer C2X-Kommunikation ausgesendet werden.

Zur Umsetzung der eigentlichen (physikalisch stattfindenden und von den übertragenen Inhalten weitgehend losgelösten) Kommunikation im Rahmen der C2X-Kommunikation kann Recheneinheit vorzugsweise dazu eingerichtet sind, die Funktionen der ITS-Access-Schicht, der ITS-Network-Schicht und der ITS-Transport-Schicht auszuführen. Bei der Verarbeitung des C2X-Kommunikationsprotokollstapels im Rahmen des ITS (Intelligent Transportation Systems) sind diese Schichten für eine erfolgreiche Kommunikation der verschiedenen Netzwerkteilnehmer verantwortlich und sorgen für eine gewünschte Verteilung der Daten im Netz. Diese Schichten arbeiten nach vorgegebenen Standards, die bspw. im Internet unter "www.standards.its.dot.gov" abrufbar sind. Die Recheneinheit ist insbesondere zum Abarbeiten dieser Standards eingerichtet.

In der ITS-Access-Schicht (Layer), auch ITS-Access Technologies Schicht genannt, werden die Anforderungen des IEEE 802.11p Protokolls umgesetzt, das unmittelbar auf der physikalischen (untersten) Schicht des C2X-Kommunikations-protokollstapels aufsetzt. Es wird dort insbesondere die Medienzugriffssteuerung (Media Access Control - MAC) realisiert, die eine zuverlässige, möglichst fehlerfreie Übertragung der Daten gewährleisten soll. Hierzu werden insbesondere der physikalische Zugriff auf das Übertragungsmedium (d.h. das Adhoc-Netzwerk) gesteuert, der Bitdatenstrom in Blöcke aufgeteilt sowie Prüf- und Folgenummern vergeben, die bspw. Rückschlüsse auf eine Kanalbelastung und auf die Integrität der einzelnen Datenpakte zulassen. Auch eine Priorisierung bestimmter Datenpakte bei der Übertragung kann in der ITS-Access-Schicht realisiert werden.

Die Aufgabe der ITS-Network-Schicht (Layer), auch Vermittlungsschicht genannt, ist es, die Vermittlung der einzelnen Datenpakte zwischen den sich ständig ändernden Netzwerkknoten zu organisieren. Dies schließt insbesondere die Datenübertragung über das gesamte Adhoc-Netzwerk von dem Sender (-Netzwerkknoten) zu dem Empfänger (-Netzwerkknoten) und damit die Wegsuche (Routing) zwischen den Netzwerkknoten ein, bei denen die Datenpakete innerhalb dieser Network-Schicht mit einem neuen (Zwischen) Ziel versehen und an den nächsten Netzwerkknoten weitergeleitet werden, bis sie ihr endgültiges Ziel (Empfänger-Netzwerkknoten) erreicht haben.

Eine große Herausforderung ist die sich aufgrund der bewegten Netzwerkknoten ständig ändernde Netzwerktopologie, sowohl im Hinblick auf die an der Kommunikation teilnehmenden Netzwerkknoten als auch deren Lage. Um die benachbarten Teilnehmer überhaupt zu ermitteln, senden die einzelnen Netzwerkknoten periodisch sog. Beacon-Telegramme (Leuchtfeuer-Telegramme) aus, um sich in dem Netzwerk bemerkbar zu machen. Die Beacon-Telegramme können zumindest die Position, ggf. auch eine Angabe über ihre Bewegungsrichtung und Geschwindigkeit erhalten. Jeder Netzwerkknoten empfängt die Beacon-Telegramme und trägt sie mit den ggf. enthaltenen Positions- und weiteren Informationen in eine Tabelle ein, die jeweils Aufschluss über die an der C2X-Kommunikation teilnehmenden Netzwerkknoten gibt.

Insbesondere für eine Unicast-Übertragung an einen ausgewählten Teilnehmer oder eine Unianycast-Übertragung an einige ausgewählte Teilnehmer ist das Weiterleiten von Datentelegrammen (Hopping oder Multi-Hopping) durch die Netzwerkknoten notwendig. Hierbei können intelligente Mechanismen zum Einsatz kommen, bei denen die Datenpakete nicht einfach geflutet, d.h. von jedem empfangenden Netzwerknoten einmal oder mehrmals wieder ausgesendet werden. Aufgrund der zu jedem Netzwerkknoten aktuell bekannten Positionsinformationen ist es möglich, für das Weiterleiten der Datenpakete denjenigen Netzwerkknoten auszuwählen, der dem Ziel am nächsten liegt. Dies beschleunigt die Kommunikation und hilft, ein Verstopfen des Netzwerks zu vermeiden, da die Datenpakete zielgerichtet weitergeleitet werden.

Bei einem auf ausgewählte räumliche Bereiche ausgerichteten, sog. "Georouting" ist es so, dass Daten an Fahrzeuge in einem bestimmten geographischen Gebiet ausgesendet werden sollen, wobei durch unterschiedlich alle, einige oder ein gezieltes Fahrzeug(e) angesprochen werden sollen. Auch hier kann ein Hopping-Mechanismus zum Einsatz kommen, bei dem vorzugsweise jedoch derjenige Netzwerkknoten das Datentelegramm erneut aussendet, der am weitesten von dem zuletzt sendenden Netzwerkknoten entfernt ist, um eine möglichst schnelle Ausbreitung in dem geografischen Gebiet zu erreichen. Zur schnelleren flächigen Abdeckung können auch jeweils mehrere Netzwerkknoten die Datenpakete wieder aussenden, wobei vorzugeweise diejenigen Netzwerkkonten eine Wiederaussendung vornehmen, die am weitesten von allen der letztsendenden Netzwerknoten, bspw. der letzten 2, 3 oder 4 sendenden Netzwerkknoten, entfernt liegen. Zur Umsetzung dieses Aussendmodus kann die Recheneinheit erfindungsgemäß dazu eingerichtet sein, die jeweils letztsendenden Netzwerkkonten mit ihren Postionen zum Zeitpunkt der Aussendung in einer Liste oder dgl. abzuspeichern bzw. zu führen. Diese Liste kann nach dem Last-in-last-out-Prinzip geführt werden.

Ferner kann die ITS-Netzwerk-Schicht einen Store-and-Forward Mechanismus anwenden, der insbesondere bei einer niedrigen Netzwerkknotendichte sinnvoll eingesetzt werden kann. Die Netzwerkknotendichte kann aus der Tabelle der Beacon-Telegramme abgeleitet werden. Zur Anwendung dieses Store-and-Forward Mechanismus erhalten die Datenpakete explizite Lebensdauern zugeordnet, innerhalb derer sie wieder ausgesendet werden sollen. Die Aussendung kann zusätzlich oder alternativ auch an ein bestimmtes geographisches Gebiet gekoppelt werden. Wenn ein Fahrzeug ein Datenpaket zur Wiederaussendung erhält, aber keinen geeigneten Netzwerkknoten zur Weiterleitung in seinem Empfangsbereich findet, kann das Datentelegramm bis zum Ablauf seiner Lebenszeit und/oder dem Verlassen des geographischen Gebiets zwischengespeichert und erst dann ausgesendet werden, wenn ein bspw. mittels eines Beacon-Telegramms ermittelter geeigneter Kommunikationspartner (Netzwerkknoten) auftaucht.

Die ITS-Transport-Schicht sorgt üblicher Weise für eine Segmentierung von Datenpaketen und eine Stauvermeidung (Congestion Control). Ziel der ITS-Transport-Schicht ist es auch, den nachfolgenden, eher anwendungsorientierten Schichten des C2X-Kommunikationsprotokollstapels einen einheitlichen Zugriff zu ermöglichen, ohne die genauen Eigenschaften des physikalischen Kommunikationsnetzes berücksichtigen zu müssen.

Sinnvoller Weise kann die Recheneinheit einer erfindungsgemäßen Fahrzeug-Antenneneinheit auch dazu eingerichtet sein, die Grundfunktionen der ITS-Facilities-Schicht auszuführen.

Die ITS-Facilities-Schicht stellt das Bindeglied zwischen den eher technisch zur Durchführung der Kommunikation vorgesehenen niedrigeren Schichten des C2X-Kommunikations-protokollstapels, insbesondere der ITS-Access-Schicht, der ITS-Network-Schicht und der ITS-Transport-Schicht, und der höheren, anwendungsbezogenen Schicht des C2X-Kommunika-tionsprotokollstapels, insbesondere der ITS-Applications-Schicht, dar. Aufgabe der ITS-Facilities-Schicht kann insbesondere das Zusammenstellen (Kodieren/Dekodieren) der Datentelegramminhalte und die Auswertung der empfangenen Datentelegramminhalte sein. Die Auswertung ist jedoch vorzugsweise auf solche Informationen beschränkt, die typischer Weise von einer Vielzahl von Anwendungen verwendet werden, so dass es günstig ist, die Daten vorzuverarbeiten und den Anwendungen als Informationen entsprechend dem ITS-Standard zur Verfügung zu stellen. Dazu gehört insbesondere eine Kartenzuordnung der verschiedenen Netzwerkknoten, d.h. insbesondere Fahrzeuge oder Infrastruktureinheiten, das Zusammenstellen direkter Mitteilungen, bspw. expliziter Gefahrenmeldungen oder einer Meldungen über aktuelle Geschwindigkeitsbegrenzungen. Eine darauf beschränkte Informationsauswertung kann ohne große Prozessorleistung ausgeführt werden, so dass es erfindungsgemäß besonders sinnvoll ist, diese Grundfunktionen der ITS-Facilities-Schicht bei der Abarbeitung des C2X-Kommunikationsprotokollstapels mit in der Recheneinheit der Fahrzeug-Antenneneinheit zu implementieren, wenn eine kostengünstige und autark an der C2X-Kommunikation teilnehmende Fahrzeug-Antenneneinheit zur Verfügung gestellt werden soll.

Gemäß einer besonderen Ausführungsform der Erfindung ist es sinnvoll, die Recheneinheit derart einzurichten, dass sie - zumindest soweit die autarke Teilnahme der Antenneneinheit an der C2X-Kommunikation betroffen ist - auf die Abarbeitung der ITS-Access-Schicht, der ITS-Network-Schicht und der ITS-Transport-Schicht sowie der ITS-Facilities-Schicht beschränkt ist, insbesondere letztere (aber ggf. auch alle Schichten) vorzugsweise im Rahmen der zuvor beschrieben Funktionen.

Für die ITS-Facilities-Schicht ist insbesondere von Vorteil, wenn die für eine Vielzahl von Anwendungen interessanten Informationen gemäß dem ITS-Standard zur Verfügung gestellt werden. Dies kann dann eine logische Schnittstelle für weitere Anwendungen darstellen, die durch die Fahrzeug-Antenneneinheit bei Bedarf optional mit abgedeckt werden können. Es wird in diesem Zusammenhang jedoch betont, dass diese Zusatzinformationen für die autarke Teilnahme an der C2X-Kommunikation der erfindungsgemäßen Antenneneinheit gerade nicht erforderlich sind und die Recheneinheit derart eingerichtet ist, dass die autarke Teilnahme ohne Einschränkungen und Fehlermeldungen auch möglich ist, wenn die Zusatzinformationen nicht vorliegen und/oder nicht ausgewertet werden.

Um diese Zusatzinformationen optional in dem Fahrzeug dennoch nutzen zu können, kann eine hochwertigere und damit teurere erfindungsgemäße Fahrzeug-Antenneneinheit eine lesende und/oder ausgebende Schnittstelle zu anderen Fahrzeugeinheiten haben. Erfindungsgemäß kann diese Schnittstelle bidirektional, aber auch nur unidirektional in die eine oder die andere Kommunikationsrichtung ausgebildet sein.

Wenn eine solche, insbesondere eine bidirektionale, Schnittstelle vorhanden ist, kann die Antenneneinheit bspw. auch noch eine Zellular-Antenne (Mobilfunk-Antenne) aufweisen und/oder zur normalen WLAN-Kommunikation insbesondere nach einem der Standards IEEE 802.11.a/b/g eingerichtet sein. Über die Schnittstelle können dann andere Fahrzeugeinheiten auf die zusätzlichen Antennenfunktionen, sowie ggf. die Satelliten-Antenne zugreifen, auch wenn die angeschlossenen Fahrzeugeinheiten die C2X-Kommunikation nicht nutzen, sondern die Fahrzeug-Antenneneinheit erfindungsgemäß autark an der C2X-Kommunikation teilnimmt.

Eine solche erfindungsgemäße Antenneneinheit kann dann als Grund-Antenneneinheit für Fahrzeuge mit Telematikfunktionen verwendet werden und stellt darüber hinaus eine erfindungsgemäß autarke, d.h. von den weiteren Fahrzeugeinheiten unabhängige C2X-Kommunikation zur Verfügung. Dies hilft gerade bei der Einführung der C2X-Kommuniktion, schnell eine ausreichende Netzwerkknotendichte zu erreichen, ohne dass die Fahrzeuge mit den sehr teuren C2X-Anwendungen ausgestattet werden müssen. Fahrzeugeinheiten mit solchen C2X-Anwendungen (aus der ITS-Applications-Schicht) sind dann aber leicht nachrüstbar, weil die eigentlichen Kommunikationsschichten des C2X-Kommunikationsprotokollstapels bereits in das Fahrzeug implementiert sind. Daher ist es besonders vorteilhaft, wenn die Schnittstelle eine Busschnittstelle an ein internes Fahrzeugkommunikationsnetz ist und universell eine mit verschiedenen Fahrzeugeinheiten im Format des Fahrzeugbusses (CAN, MOST oder dgl.) kommunizieren kann.

Gemäß einer bevorzugten Ausführungsform einer solchen erfindungsgemäßen Fahrzeug-Antenneneinheit mit Schnittstelle zum Fahrzeug bzw. zu anderen Fahrzeugeinheiten kann die Recheneinheit dazu eingerichtet sein, die aus der C2X-Kommunikation extrahierten Informationen zu filtern und die Schnittstelle als eine Daten-ausgebende Schnittstelle zu verwenden, um gefilterte Informationen auszugeben. Diese Funktion der Recheneinheit kann als konkrete Anwendung in einem ITS-Applications-Layer verstanden werden, ist jedoch darauf beschränkt, einfach nutzbare Informationen in dem Fahrzeug zur Verfügung zu stellen. Daher werden insbesondere keine Positionsdaten von anderen Fahrzeugen oder Netzwerkknoten über die Schnittstelle ausgegeben, da diese in der Regel eine intensive Nach- bzw. Weiterverarbeitung in nachgeschalteten Fahrzeugeinheiten benötigen. Um die Systemlast im Fahrzeug so niedrig wie möglich zu halten, bietet es sich daher an, nur ausgewählte Botschaften aus dem C2X-Datenstrom bzw. den daraus extrahierten Informationen herauszufiltern und über die auch nur als lesende Schnittstelle betriebene Schnittstelle dem Fahrzeug zur Verfügung zu stellen. Idealerweise sind dies Informationen, die ohne weitere Nachbearbeitung oder zumindest mit sehr geringer Nachbearbeitung direkt für Informationen, Warnungen oder Aktionen im Fahrzeug verwendet werden können. Beispiele hierfür sind Geschwindigkeitsbeschränkungen, die von einer Infrastruktureinheit (Road Side Unit RSU) empfangen werden, ebenso Stauinformationen von anderen Fahrzeugen oder Infrastruktureinheiten. Informationen dagegen, die für sich genommen noch keine Warnungen oder dergleichen auslösen können (wie eine Fahrzeugposition, die gefährlich sein kann, wenn sie ein sich von der Seite näherndes Fahrzeug an einer Kreuzung repräsentieren), werden dagegen erfindungsgemäß nicht übermittelt, da diese Daten eine hohe Verarbeitungsleistung im eigenen Fahrzeug benötigen, um entsprechende Informationen, Warnungen oder Aktionen hervorzurufen. Die herausgefilterten Informationen können beispielsweise auch derart ausgewählt werden, dass sie unmittelbar auf einem Display einer Mensch-Maschine-Schnittstelle darstellbar ist, wie sie in nahezu jedem Fahrzeug vorhanden ist.

In einer Weiterentwicklung dieses Erfindungsgedankens können die Kriterien für das Filtern der aus der C2X-Kommunikation extrahierten Informationen insbesondere durch Softwareeingriffe und/oder Parameter vorgebbar und veränderbar sein, so dass sich die Filter mittels Software anpassen lassen, um Veränderungen mit der Zeit zu ermöglichen, wenn z.B. neue Botschaften definiert werden oder neue Fahrzeugeinheiten mit erweiterten Funktionen in das Fahrzeug installiert werden. In diesem Fall kann also eine eigenständige und automatische Konfiguration der Antenneneinheit im Hinblick auf die Nutzung dieser neuen Fahrzeugeinheit erfolgen.

Ferner kann die Recheneinheit gemäß einer anderen Ausführungsform der vorliegenden Erfindung dazu eingerichtet sein, die Schnittstelle als eine Daten-lesende Schnittstelle zu verwenden, um von einer Fahrzeug-Sensoreinheit mit Fahrzeugsensoren ausgegebene Sensordaten zur verbesserten Ermittlung der eigenen Fahrzeugposition zu verwenden und diese verbesserte Fahrzeugposition in der C2X-Kommunikation zu verwenden. Auch diese konkrete Anwendung kann eine Anwendung in der ITS-Applications-Schicht sein und dient der Erzeugung qualitativ hochwertigerer Daten insbesondere für ITS-Anwendungen in anderen Fahrzeugen. Eine signifikante Auswirkung auf die Durchführung der eigentlichen Kommunikation im Rahmen der C2X-Kommunikation hat die verbesserte Positionsangabe des eigenen Fahrzeugs dagegen nicht. Für diesen Fall kann die Schnittstelle auch ausschließlich als Daten-lesende Schnittstelle ausgebildet sein.

Ferner kann die Schnittstelle auch dazu eingerichtet sein, Eingaben des Fahrers (z.B. eine Aktivierung des Blaulichts bei einem Einsatzfahrzeug oder Betätigung des Warnblinkers oder dgl.) zu lesen, entweder über dedizierte Verbindungen oder über entsprechende Botschaften auf einem Fahrzeugbus. Diese Daten werden dann in der Recheneinheit zusammen mit eventuell notwendigen Zusatzdaten als entsprechende Kommunikationsbotschaften verpackt und versendet. Die einlesbaren Fahreraktionen hängen von den unterstützen Botschaften, und damit den unterstützen Anwendungen, ab.

Gemäß einer bevorzugten Weiterentwicklung können die beiden vorgenannten Anwendungen auch in der Recheneinheit kombiniert sein, wozu die Schnittstelle dann als Daten-ausgebende und als Daten-lesende Schnittstelle, also bidirektionale Schnittstelle ausgebildet ist. Insbesondere im Falle einer derartigen bidirektionalen Schnittstelle ist es besonders vorteilhaft, die Fahrzeug-Antenneneinheit auch mit einer Zellular-Antenne zur Kommunikation mit einem öffentlichen Mobilfunknetz und/oder einer WLAN-Antenne insbesondere zur Kommunikation nach dem Standard IEEE 802.11.a/b/g auszustatten, wobei jeder Antenne jeweils Treiberelemente zugewiesen sind, die zum bitweisen Aussendung und/oder Empfangen von Daten eingerichtet sind. Sofern dies technisch möglich ist, können einzelne Antennen auch mit Doppelfunktionen zur Verwendung in verschiedenen Kommunikationsarten eingesetzt werden. Die Schnittstelle kann als Schnittstelle zu einem Fahrzeugbus ausgebildet sein, so dass andere Fahrzeugeinheiten in dem Fahrzeug die Fahrzeug-Antenneneinheit für sämtliche ihrer Telematikfunktionen umfassend einsetzen können.

Die Fahrzeugsensoren zur Verbesserung bei Eigenpositionsermittlung können Sensoren wie Raddrehzahl-Sensoren, Lenkwinkel-Sensoren, Gierraten-Sensoren oder dergleichen sein, die in Kombination mit dem Satelliten-Ortungssignal eine modelbasierte Verbesserung der Position ermöglichen.

Der eingangs beschriebenen Minimalvariante der Fahrzeug-Antenneneinheit mit der Möglichkeit zur autarken C2X-Kommunikation ist es möglich, mit nur einer Systemkomponente, nämlich der erfindungsgemäß vorgeschlagenen intelligenten Fahrzeug-Antenneneinheit, ein Fahrzeug preiswert zu einem vollwertigen Mitglied der C2X-Kommunikation aus- bzw. aufzurüsten. Derartige Fahrzeug-Antenneneinheiten können nicht nur als Erstausrüstung, sondern auch als Nachrüstlösungen für Fahrzeuge angeboten werden, die Ersatz für bisherige Antennenlösungen bieten, wobei in einem solchen Fall es auch sinnvoll sein kann, sämtliche für die Fahrzeugtelematik benötigten Antennen und Funktionen zusätzlich zu der autarken C2X-Kommunikation zu integrieren und die vorherige Fahrzeugeigenantenne zu ersetzen. Ohne diese zusätzlichen Antennen und Telematikfunktionen kann die erfindungsgemäße Fahrzeug-Antenneneinheit auch als sehr günstige Nachrüstlösung angeboten werden und die fahrzeugeigenen Antennen parallel betrieben werden.

Mit der erfindungsgemäß vorgeschlagenen Fahrzeug-Antenneneinheit wird ein System geringer Komplexität zur Verfügung gestellt, mit dem eine Teilnahme eines Fahrzeugs an einer C2X-Kommunikation ermöglicht wird. Hierdurch werden die Akzeptanz und die Ausrüstung der Fahrzeuge zur Teilnahme an der C2X-Kommunikation erheblich verbessert, was zu einer schnellen Durchsetzung des Systems in der Praxis führen wird. Außerdem kann diese vorgeschlagene Antenneneinheit erfindungsgemäß als durchgängiges Konzept für den Einsatz bei Kleinwagen bis hin zur Oberklasse und Nutzfahrzeugen eingesetzt werden, da die vorgeschlagene Fahrzeug-Antenneneinheit flexibel um weitere Funktionen aus dem ITS-Applications-Layer erweiterbar ist.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: eine erfindungsgemäße Fahrzeug-Antenneneinheit gemäß einer ersten Ausführungsform in ihrem schematischen Aufbau und
- Fig. 2: eine erfindungsgemäße Fahrzeug-Antenneneinheit gemäß einer zweiten Ausführungsform in ihrem schematischen Aufbau.

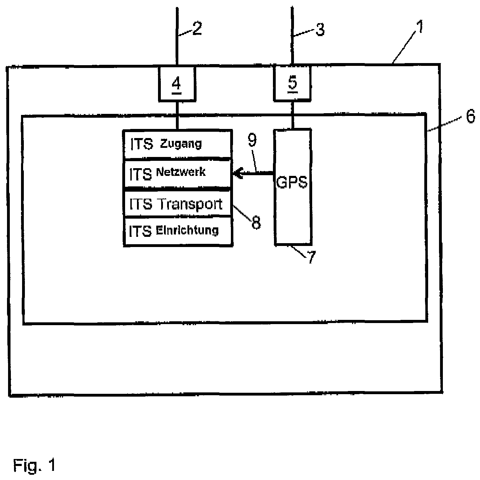

In Fig. 1 ist eine Fahrzeug-Antenneneinheit 1 zur Teilnahme an der Fahrzeug-zu-Umgebung-Kommunikation entsprechend dem DSRC- bzw. ITS-G5-Standard mit einer Adhoc-Netzwerk-Antenne 2 zum Senden und Empfangen in einem Frequenzbereich von 5,9 GHz schematisch dargestellt. Die Fahrzeug-Antenneneinheit 1 ist ferner mit einer Satelliten-Antenne 3 zum Empfang von Satelliten-Ortungssignalen ausgestattet.

Jeder Antenne 2, 3 sind Treiberelemente 4, 5 zum Aussenden und/oder Empfangen von Daten oder Signalen mit der Adhoc-Netzwerk-Antenne 2 und der Satelliten-Antenne 3 zugeordnet sind. Die Treiberelemente 4, 5 können als Hardware- und/oder Softwareelemente ausgebildet sein. Im Falle von Software-Elementen können Teile der Treiberelemente 4, 5 mit in die Recheneinheit 6 der Fahrzeug-Antenneneinheit 1 integriert sein. Erfindungsgemäß ist die Recheneinheit 6 ferner zur Auswertung der Satelliten-Ortungssignale und zur autarken Teilnahme der Antenneneinheit 1 an der Fahrzeug-zu-Umgebung-Kommunikation (C2X) eingerichtet. Hierzu sind in der Recheneinheit 6 eine Satellitenpositionierung 7 und eine C2X-Stapelverarbeitung 8 zur Abarbeitung eines C2X-Kommunikationsprotokollstapels ausgebildet. Die Satellitenpositionierung 7 und die C2X-Stapelverarbeitung 8 sind typischerweise als Software in der Recheneinheit 6 implementiert.

Durch die Satellitenpositionierung 7 ist die Recheneinheit 6 dazu eingerichtet, aus empfangenen Satelliten-Ortungs-signalen insbesondere die Fahrzeugpositionen, die Fahrzeuggeschwindigkeit und die Fahrzeugrichtung zu ermitteln und gegebenenfalls anderen Anwendungen in der Recheneinheit 6 zur Verfügung zu stellen. Durch die C2X-Stapelverarbeitung 8 ist die Recheneinheit 6 ferner dazu eingerichtet, die Funktionen ITS-Access, ITS-Network, ITS-Transport und ITS-Facilities entsprechend den Schichten des C2X-Kommunikationsprotokollstapels abzuarbeiten. Die einzelnen Funktionen der verschiedenen Schichten ITS-Access, ITS-Network, ITS-Transport und ITS-Facilities wurden eingangs bereits eingehend erläutert. Die Ausführung dieser Funktionen ist durch eine Software-Implementierung in der Recheneinheit 6 verwirklicht.

Hierbei ist in der Recheneinheit 6 zwischen der Satellitenpositionierung 7 und der ITS-Network-Schicht der C2X-Stapelverarbeitung 8 eine interne Schnittstelle 9 ausgebildet, mit welcher die aus den Satelliten-Ortungssignalen ermittelten Fahrzeugpositionen, Fahrzeuggeschwindigkeit und Fahrrichtung aus der Satellitenpositionierung 7 unmittelbar in die ITS-Network-Schicht der Stapelverarbeitung 8 eingegeben werden können. Dadurch stehen diese Informationen im Rahmen der C2X-Kommunikation sowohl für die Integration in die Datentelegramme als auch für die Durchführung der Kommunikation in der zuvor beschriebenen Weise zur Verfügung.

Damit wurde durch die Fahrzeug-Antenneneinheit 1 ein autarker Teilnehmer an einer C2X-Kommunikation geschaffen, der für die Teilnahme in einem C2X-Adhoc-Netzwerk keine Anbindung an sonstige Fahrzeugeinheiten benötigt. Außerdem sind die in der Recheneinheit 6 der Fahrzeug-Antenneneinheit 1 durchgeführten Berechnungen ressourcenschonend, so dass für die Recheneinheit 6 in dem hier dargestellten Umfang ein vergleichsweise kleiner und günstiger Prozessor ausreichend ist. Insgesamt wird also eine in einem Fahrzeug einfach einsetzbare und gegebenenfalls sogar einfach nachrüstbare Fahrzeug-Antenneneinheit 1 geschaffen, die als Netzwerkknoten in einer Fahrzeug-zu-Umgebung-Kommunikation (C2X) zur Verfügung steht.

Eine derartige Antenneneinheit 1 kann standardmäßig in Fahrzeugen mit verbaut werden, um die Einführung der Fahrzeug-zu-Fahrzeug-Kommunikation zu fördern, auch wenn das Fahrzeug selbst in der in Fig. 1 dargestellten Ausführungsform der Fahrzeug-Antenneneinheit 1 keinen Nutzen von den ausgetauschten Informationen hat, da diese nicht verarbeitet werden.

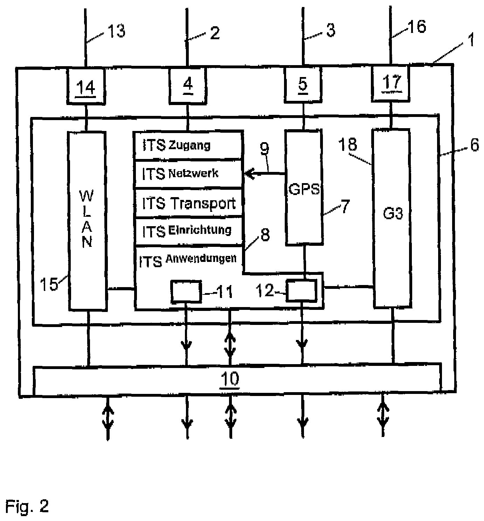

Fig. 2 zeigt eine zweite Ausführungsform der Fahrzeug-Antenneneinheit 1, die auch mit demselben Bezugszeichen bezeichnet werden soll, da diese die Funktionalität der in Fig. 1 dargestellten Fahrzeug-Antenneneinheit 1 beibehält und lediglich um Zusatzkomponenten und -funktionen erweitert wurde. Entsprechend ist festzuhalten, dass die Fahrzeug-Antenneneinheit 1 über die Adhoc-Netzwerk-Antenne 2 nach wie vor zur autarken C2X-Kommunikation eingerichtet ist und diese auch durchführt, unabhängig davon welche weiteren Funktionen der Fahrzeug-Antenneneinheit 1 nun in Verbindung mit weiteren Fahrzeugeinheiten angesprochen werden. Insoweit wird auf die vorstehende Beschreibung verwiesen, die in vollem Umfang auch für die Fahrzeug-Antenneneinheit gemäß Fig. 2 Gültigkeit hat.

Hinsichtlich der hinzugefügten Komponenten und Merkmale ist anzumerken, dass die in Fig. 2 dargestellte Ausführungsform der Fahrzeug-Antenneneinheit nicht so zu verstehen ist, dass sämtliche dieser Komponenten und Funktionen zusammenwirken und als Wirkeinheit verstanden werden. Vielmehr ist es so, dass einzelne Funktionen und Komponenten auch separat voneinander in einer Fahrzeug-Antenneneinheit 1 realisiert werden können und kein Zwang besteht, sämtliche dieser Komponenten in einer erfindungsgemäßen Antenneneinheit 1 zu kombinieren.

Als zusätzliche Komponente weist die Fahrzeug-Antenneneinheit 1 gemäß Fig. 2 eine Schnittstelle 10 zu anderen Fahrzeugeinheiten auf, die - wie durch die Pfeile in Fig. 2 angedeutet - bidirektional oder unidirektional in Daten-lesende oder Daten-ausgebende Richtung ausgebildet sein kann. Ferner wurde die C2X-Stapelverarbeitung 8 in der Recheneinheit 6 um eine Schicht mit den ITS-Applications erweitert, in der eine oder mehrere Anwendungen vorgesehen sind, die jedoch grundsätzlich unabhängig voneinander im Zusammenwirken mit einer unidirektional ausgebildeten Schnittstelle 10 arbeiten können.

In diesem Zusammenhang kann die Recheneinheit 6 im Rahmen der C2X-Stapelverarbeitung 8 in der ITS-Applications-Schicht einen Filter 11 aufweisen, der dazu eingerichtet ist, die aus der C2X-Kommunikation extrahierten Informationen zu filtern und die als Daten-ausgebende Schnittstelle eingerichtete Schnittstelle 10 zu verwenden, um die gefilterten Informationen auszugeben. Diese können dann durch nachgeschaltete Fahrzeugeinheiten ausgewertet werden. Hierbei ist insbesondere vorgesehen, dass nur solche Informationen durch den Filter 11 gefiltert und weitergegeben werden, die keine nennenswerte Nach- oder Weiterverarbeitung in nachgeschalteten Fahrzeugeinheiten benötigen und beispielsweise in einem ohnehin vorhandenen Display einer Mensch-Maschine-Schnittstelle unmittelbar angezeigt werden können. Dies können Gefahrenmeldungen oder Meldungen über Geschwindigkeitsbeschränkungen oder dergleichen sein, die im Rahmen der C2X-Kommunikation empfangen wurden. Sofern nur diese Filter-Anwendung 11 in der Recheneinheit 6 bzw. der ITS-Applications-Schicht der C2X-Stapelverarbeitung 8 implementiert ist, reicht es aus, die Schnittstelle 10 als Daten-ausgebende Schnittstelle unidirektional zu gestalten.

Unabhängig davon, gegebenenfalls aber auch gemeinsam mit der zuvor beschriebenen Funktionalität kann in der ITS-Applications-Schicht eine Fahrzeugpositionierung 12 realisiert sein, die als Eingangsdaten die Positionsdaten der der Satellitenpositionierung 7 erhält. Weitere Eingangsdaten können über die in diesem Fall als Daten-lesende Schnittstelle 10 ausgebildete Schnittstelle von einer Fahrzeugsensoreinheit mit Fahrzeugsensoren stammen, die vorzugsweise dynamische Zustände des Fahrzeugs erfassen. Solche Sensoren können insbesondere Graddrehzahlsensoren, Lenkwinkelsensoren, Gierratensensoren oder dergleichen sein. In diesem Fall ist die Fahrzeugpositionierung 12 in der Lage, in Kombination mit den Positionierungsdaten der Satellitenpositionierung 7 eine modellbasierte Verbesserung der Fahrzeugposition zu ermitteln. Diese Daten können dann in der C2X-Kommunikation über die Adhoc-Netzwerk-Antenne 2 zur Verfügung stehen.

Sofern sowohl die Filteranwendung 11 als auch die Fahrzeugpositionierungsanwendung 12 in der Recheneinheit 6 realisiert werden, ist es vorteilhaft, die Schnittstelle 10 als bidirektionale Schnittstelle auszubilden, vorzugsweise als genormte Fahrzeugbus-Schnittstelle, so dass eine universelle Kommunikation mit Fahrzeugeinheiten möglich ist, welche an diesem Fahrzeugbus angeschlossen sein können. Dies ist durch weitere, bidirektionale Anschlüsse (mit Doppelpfeil) angedeutet.

In diesem Zusammenhang ist es auch sinnvoll, die Fahrzeug-Antenneneinheit 1 zusätzlich mit weiteren Kommunikationsarten bzw. -möglichkeiten auszustatten. Dies kann zum einen eine WLAN-Antenne 13 mit einem entsprechenden WLAN-Treiber 14 sein, mit der eine übliche WLAN-Kommunikation nach IEEE 802.11.a/b/g/n durchgeführt werden kann. Sofern dies technisch möglich und sinnvoll ist, können die Adhoc-Netzwerk-Antenne 2 und die WLAN-Antenne 13 auch als kombinierte Antenne mit einer kombinierten Treiberelement realisiert werden, so dass physikalisch diese beiden Antennen als gemeinsame Antenne ausgebildet sind.

Der WLAN-Treiber 14 ist an eine WLAN-Stapelverarbeitung 15 angeschlossen, die in ähnlicher Weise zu der C2X-Stapelverarbeitung 8 die Kommunikation im Rahmen eines herkömmlichen WLAN-Netzes organisiert. Insbesondere auf der Ebene der Applications-Schicht können die WLAN-Stapelverarbeitung 15 und die C2X-Stapelverarbeitung 8 miteinander verbunden sein. Über diese WLAN-Verbindung ist es möglich, beispielsweise in einer Heimanwendung größere Datenmengen (MP3-Dateien oder dergleichen) aus einem Haus-WLAN-Netz in eine Multimediasteuereinheit des Fahrzeugs zu laden, die an die Schnittstelle 10 angeschlossen ist. Die WLAN-Verbindung kann auch genutzt werden, um im Rahmen einer C2X-Kommunikation größere Datenmengen beispielsweise über einen Link aus einem anderen Fahrzeug herunterzuladen, wobei der Link im Rahmen der Adhoc-Netzwerk-Kommunikation mit der Antenne 2 übertragen werden kann.

Schließlich kann in die Fahrzeug-Antenneneinheit 1 auch noch eine Zellular-Antenne 16 mit einem Zellular-Treiber 17 angeschlossen sein, um über die Fahrzeug-Antenneneinheit 1 auch an einer üblichen Mobilfunkkommunikation über öffentliche Mobilfunknetze teilnehmen zu können. Die Recheneinheit 6 ist in einem solchen Fall zusätzlich mit einer Zellular-Stapelverarbeitung 18 ausgestattet, die in einer Applications-Schicht auch mit der ITS-Applications-Schicht der C2X-Stapelverarbeitung 8 zum Datenaustausch in Verbindung stehen kann. Über die in diesem Fall auch vorzugsweise bidirektional ausgebildete Schnittstelle 10 können die zelluläre Mobilfunkkommunikation nutzende Fahrzeugeinheiten an die Fahrzeug-Antenneneinheit 1 angeschlossen sein.

Somit wird eine universell im Fahrzeug einsetzbare Fahrzeug-Antenneneinheit 1 vorgeschlagen, die zusätzlich zu ihrer Funktion, als Antennen-Einheit für in dem Fahrzeug vorgesehene Fahrzeugeinheiten zu dienen, auch autark und ohne Nutzen der Schnittstelle 10 als Netzwerkknoten an der C2X-Kommuniaktion teilnimmt.

### Bezugszeichenliste:

- 1: Fahrzeug-Antenneneinheit
- 2: Adhoc-Netzwerk-Antenne
- 3: Satelliten-Antenne
- 4: Treiberelement für Adhoc-Netzwerk-Antenne
- 5: Treiberelement für Satelliten-Antenne
- 6: Recheneinheit
- 7: Satellitenpositionierung
- 8: C2X-Stapelverarbeitung
- 9: interne Schnittstelle
- 10: Schnittstelle zu anderen Fahrzeugeinheiten
- 11: Filter
- 12: Fahrzeugpositionierung
- 13: WLAN-Antenne
- 14: WLAN-Treiber
- 15: WLAN-Stapelverarbeitung
- 16: Zellular-Antenne
- 17: Zellular-Treiber
- 18: Zellular-Stapelverarbeitung

## Patentansprüche

1. Fahrzeug-Antenneneinheit zur Teilnahme an der Fahrzeug-zu-Umgebung-Kommunikation entsprechend dem DSRC- oder ITS-G5-Standard mit einer Adhoc-Netzwerk-Antenne (2) zum Senden und Empfangen im Bereich von 5,9 GHz,
mit einer Satelliten-Antenne (3) zum Empfang von Satelliten-Ortungssignalen und
mit Treiberelementen (3, 4), die zum Aussenden und/oder zum Empfangen mit der Adhoc-Netzwerk-Antenne (2) und der Satelliten-Antenne (3) eingerichtet sind,
mit einer Recheneinheit (6) und mit einer Schnittstelle (10) zu anderen Fahrzeugeinheiten,
**dadurch kennzeichnet,**
**dass** die Recheneinheit (6)zur Auswertung der Satelliten-Ortungssignale und zur autarken Teilnahme der Antenneneinheit an der Fahrzeug-zu-Umgebung-Kommunikation eingerichtet ist, wobei sämtliche Verarbeitungsschritte eines Fahrzeug-zu-Fahrzeug-Umgebung-Kommunikationsprotkollstapels, von der Recheneinheit (6) eigenständig und ohne Zugriff auf die Schnittstelle (10)ausführbar sind.

2. Fahrzeug-Antenneneinheit nach Anspruch 1, **dadurch gekennzeichnet, dass** die Recheneinheit (6) dazu eingerichtet ist, aus empfangenen Satelliten-Ortungssignalen die Fahrzeugposition, die Fahrzeuggeschwindigkeit und die Fahrrichtung zu ermitteln.

3. Fahrzeug-Antenneneinheit nach Anspruch 1 oder 2, **dadurch gekennzeichnet, dass** die Recheneinheit (6) dazu eingerichtet ist, die Funktionen der ITS-Access-Schicht, der ITS-Network-Schicht und der ITS-Transport-Schicht auszuführen.

4. Fahrzeug-Antenneneinheit nach einem der vorhergehenden Ansprüche, **dadurch gekennzeichnet, dass** die Recheneinheit (6) dazu eingerichtet ist, die Grundfunktionen der ITS-Facilities-Schicht auszuführen.

5. Fahrzeug-Antenneneinheit nach einem der Ansprüche 1 bis 4, **dadurch gekennzeichnet, dass** die Recheneinheit (6) dazu eingerichtet ist, die aus der Fahrzeug-zu-Umgebung-Kommunikation extrahierten Informationen zu filtern und die Schnittstelle (10) als eine Daten-ausgebende Schnittstelle zu verwenden, um gefilterte Informationen auszugeben.

6. Fahrzeug-Antenneneinheit nach Anspruch 5, **dadurch gekennzeichnet, dass** Kriterien für das Filtern der aus der Fahrzeug-zu-Umgebung-Kommunikation extrahierten Informationen vorgebbar und veränderbar sind.

7. Fahrzeug-Antenneneinheit nach einem der Ansprüche 1 bis 6, **dadurch gekennzeichnet, dass** die Recheneinheit (6) dazu eingerichtet ist, die Schnittstelle (10) als eine Daten-lesende Schnittstelle zu verwenden, um von einer Fahrzeug-Sensoreinheit mit Fahrzeugsensoren ausgegebene Sensordaten zur verbesserten Ermittlung der eigenen Fahrzeugposition zu verwenden und diese verbesserte Fahrzeugposition in der Fahrzeug-zu-Umgebung-Kommunikation zu verwenden.

8. Fahrzeug-Antenneneinheit nach einem der Ansprüche 1 bis 7, **dadurch gekennzeichnet, dass** die Fahrzeug-Antenneneinheit (1) eine Zellular-Antenne (16) und/oder eine WLAN-Antenne (14), jeweils mit Treiberelementen (17, 14), die zum bitweisen Aussenden und/oder Empfangen von Daten eingerichtet sind, aufweist.

## Claims

1. Vehicle antenna unit for participation in vehicle-to-surroundings communication in accordance with the DSRC or ITS-G5 standard having an adhoc network antenna (2) for sending and receiving in the region of 5.9 GHz, having a satellite antenna (3) for receiving satellite locating signals and having driver elements (3, 4), which are set up to send and/or receive using the adhoc network antenna (2) and the satellite antenna (3), having a computation unit (6) and having an interface (10) to other vehicle units, **characterized in that** the computation unit (6) is set up to evaluate the satellite locating signals and for the purpose of independent participation by the antenna unit in the vehicle-to-surroundings communication, all of the processing steps of a vehicle-to-vehicle surroundings communication protocol stack being executable by the computation unit (6) autonomously and without access to the interface (10).

2. Vehicle antenna unit according to Claim 1, **characterized in that** the computation unit (6) is set up to use received satellite locating signals to ascertain the vehicle position, the vehicle speed and the direction of travel.

3. Vehicle antenna unit according to Claim 1 or 2, **characterized in that** the computation unit (6) is set up to perform the functions of the ITS Access layer, the ITS Network layer and the ITS Transport layer.

4. Vehicle antenna unit according to one of the preceding claims, **characterized in that** the computation unit (6) is set up to perform the basic functions of the ITS Facilitates layer.

5. Vehicle antenna unit according to one of Claims 1 to 4, **characterized in that** the computation unit (6) is set up to filter the information extracted from the vehicle-to-surroundings communication and to use the interface (10) as a data outputting interface in order to output filtered information.

6. Vehicle antenna unit according to Claim 5, **characterized in that** criteria for filtering the information extracted from the vehicle-to-surroundings communication are prescribable and alterable.

7. Vehicle antenna unit according to one of Claims 1 to 6, **characterized in that** the computation unit (6) is set up to use the interface (10) as a data reading interface in order to use sensor data which are output by a vehicle sensor unit with vehicle sensors for the purpose of improved ascertainment of the individual vehicle position and to use this improved vehicle position in the vehicle-to-surroundings communication.

8. Vehicle antenna unit according to one of Claims 1 to 7, **characterized in that** the vehicle antenna unit (1) has a cellular antenna (16) and/or a WLAN antenna (14), each having driver elements (17, 14) which are set up to send and/or receive data bit by bit.

## Revendications

1. Unité à antenne de véhicule destinée à participer à une communication véhicule-environnement selon la norme DSRC ou ITS-G5, comprenant une antenne réseau ad hoc (2) pour l'émission et la réception dans la gamme de 5,9 GHz, une antenne satellite (3) pour la réception de signaux de localisation par satellite et des éléments pilotes (3, 4) qui sont conçus pour permettre l'émission et/ou la réception au moyen de l'antenne réseau ad hoc (2) et de l'antenne satellite (3), comportant une unité de calcul (6) et une interface (10) vers d'autres unités de véhicule,
**caractérisée en ce que** l'unité de calcul (6) est conçue pour évaluer les signaux de localisation par satellite et pour permettre à l'unité à antenne de participer de manière autonome à la communication véhicule-environnement, dans laquelle la totalité des étapes de traitement d'une pile de protocole de communication véhicule-environnement de véhicule peuvent être exécutées indépendamment par l'unité de calcul (6) et sans accès à l'interface (10).

2. Unité à antenne de véhicule selon la revendication 1,
**caractérisée en ce que** l'unité de calcul (6) est conçue pour déterminer la position du véhicule, la vitesse du véhicule et la direction de déplacement à partir des signaux de localisation par satellite reçus.

3. Unité à antenne de véhicule selon la revendication 1 ou 2, **caractérisée en ce que** l'unité de calcul (6) est conçue pour exécuter les fonctions de la couche d'accès ITS, de la couche de réseau ITS et de la couche de transport ITS.

4. Unité à antenne de véhicule automobile selon l'une quelconque des revendications précédentes, **caractérisée en ce que** l'unité de calcul (6) est conçue pour exécuter les fonctions de base de la couche d'installations ITS.

5. Unité à antenne de véhicule selon l'une quelconque des revendications 1 à 4, **caractérisée en ce que** l'unité de calcul (6) est conçue pour filtrer les informations extraites de la communication véhicule-environnement et pour utiliser l'interface (10) en tant qu'interface de sortie de données afin de délivrer des informations filtrées.

6. Unité à antenne de véhicule selon la revendication 5, **caractérisée en ce que** les critères relatifs au filtrage des informations extraites de la communication véhicule-environnement peuvent être préréglés et modifiés.

7. Unité à antenne de véhicule selon l'une quelconque des revendications 1 à 6, **caractérisée en ce que** l'unité de calcul (6) est conçue pour utiliser l'interface (10) en tant qu'interface de lecture de données afin d'utiliser des données de capteur délivrées par une unité à capteur de véhicule comportant des capteurs de véhicule pour déterminer de manière améliorée sa propre position de véhicule et pour utiliser ladite position de véhicule améliorée dans la communication véhicule-environnement.

8. Unité à antenne de véhicule selon l'une quelconque des revendications 1 à 7, **caractérisée en ce que** l'unité à antenne de véhicule (1) comprend une antenne cellulaire (16) et/ou une antenne WLAN (14), respectivement dotées d'éléments conducteurs (17, 14) conçus pour l'émission et/ou la réception de données bit par bit.
